# EUROPÄISCHE PATENTANMELDUNG

(11) **EP 1 048 522 A2**
(43) Veröffentlichungstag der Anmeldung: **02.11.2000**
(21) Anmeldenummer: 00107370.9
(22) Anmeldetag: 05.04.2000
(51) Int. Cl.: B60Q 1/076, B60Q 1/24

(54) **Scheinwerfer, insbesondere zum Aufbau auf Fahrzeuge**

(30) Priorität: 29.04.1999 DE 29907483 U
(71) Anmelder: Kennleuchten-Technische-Anlagen GmbH, 17309 Jatznick (DE)
(72) Erfinder: Woitschöll, Hans-Dieter, 17309 Jatznick (DE)
(74) Vertreter: Möller, Friedrich, Dipl.-Ing.

(57) **Zusammenfassung**

Die Erfindung betrifft einen Scheinwerfer (10), insbesondere zum Aufbau auf Fahrzeugen.

Bekannt ist die Verwendung von Handscheinwerfern zum gezielten Anstrahlen oder Ausleuchten im Dunkeln. Diese können im Fahrzeuginneren angeordnet und aus einer Steckdose über Spiralkabel gespeist werden. Nachteilig ist die erforderliche Handhabung des Handscheinwerfers durch eine Bedienungsperson.

Der erfindungsgemäße Scheinwerfer (10) ist gekennzeichnet durch eine motorische Verstellbarkeit um mindestens eine Achse, vorzugsweise um eine horizontale und eine vertikale Achse.

## Beschreibung

Die Erfindung betrifft einen Scheinwerfer, insbesondere zum Aufbau auf Fahrzeugen. Bekannt ist die Anordnung von Blaulichtern oder Blaulichtanlagen auf Polizei- und Feuerwehrfahrzeugen. In Deutschland sind auf Polizeifahrzeugen zwei Blaulichter an einem quergerichteten Träger auf dem Fahrzeugdach üblich.

Weiterhin bekannt ist die Verwendung von Handscheinwerfern zum gezielten Anstrahlen oder Ausleuchten im Dunkeln. Derartige Handscheinwerfer können beispielsweise im Fahrzeuginneren angeordnet und aus einer Steckdose über Spiralkabel gespeist werden. Nachteilig ist die erforderliche Handhabung des Handscheinwerfers durch eine Bedienungsperson.

Aufgabe der vorliegenden Erfindung ist es, einen Scheinwerfer zu schaffen, der nicht von einer Bedienungsperson gehalten werden muß, der aber gleichwohl auf ein bestimmtes Ziel ausrichtbar ist.

Der erfindungsgemäße Scheinwerfer ist gekennzeichnet durch eine motorische Verstellbarkeit um mindestens eine Achse. Vorzugsweise ist eine motorische Verstellung um mindestens zwei Achsen möglich. Der Scheinwerfer kann äußere Abmessungen entsprechend einem handelsüblichen Blaulicht aufweisen und anstelle eines solchen oder zusätzlich zu diesem auf einem Fahrzeugdach oder auf geeigneten Auslegern montiert werden. Ebenfalls möglich ist eine mobile Befestigung mittels drei Magnetfüßen, wobei ein flexibles Kabel für die Stromversorgung zeitweilig mit dem Fahrzeug verbunden wird, etwa über einen Zigarettenanzünder, oder sogar eine Anordnung im Fahrzeuginneren.

Vorteilhafterweise ist ein Reflektor des Scheinwerfers mit einer Lampe um eine vertikale Achse verdrehbar und außerdem um eine horizontale Achse schwenkbar und zwar unabhängig voneinander und/oder in miteinander gekoppelter Weise. Durch die motorische Verstellung des Reflektors werden manuelle Tätigkeiten stark reduziert. Erforderlich ist nur noch die Bedienung über entsprechende Schaltorgane. Das umständliche Hantieren mit dem Reflektor entfällt.

Trotz der verschiedenen Verstellmöglichkeiten muß die Versorgung des Scheinwerfers mit Lichtstrom weiterhin so einfach wie möglich bleiben. Die Halterung des Reflektors muß entsprechend ausgebildet sein. Zu diesem Zweck ist der Reflektor an einem um eine erste Achse schwenkbaren Gestell, insbesondere an einer Gabel gehalten. Im Gestell, d. h. relativ zu diesem ist der Reflektor um eine zweite Achse schwenkbar. Außerdem erfolgt die Verstellung um die zweite Achse durch einen Schwenkhebel, dessen Drehachse eine dritte Achse darstellt, die konzentrisch zur ersten Achse angeordnet ist. Für die Verstellung des Scheinwerfers in horizontaler und vertikaler Ebene sind somit nur Drehbewegungen um zwei konzentrisch bzw. koaxial zueinander angeordnete Achsen erforderlich. Vorzugsweise ist dem Gestell eine angetriebene Hohlwelle - erste Achse - zugeordnet, wobei in der Hohlwelle eine weitere angetriebene Welle - dritte Achse - drehbar gelagert ist. Durch Antrieb der Hohlwelle ist das Gestell relativ zum Gehäuse drehbar, während die aus der Hohlwelle herausragende weitere Welle den Schwenkhebel bewegt. Entsprechende Motoren und Getriebe für die beiden Wellen können im Gehäuse fest angeordnet sein.

Anstelle eines Schwenkhebels für die Übertragung der Bewegung von der dritten Achse auf die zweite Achse kann auch ein Riementrieb oder eine andere Kraftübertragung vorgesehen sein.

Als Antriebe sind vorzugsweise Schrittmotoren vorgesehen. Diese wirken über einen Schneckentrieb auf die jeweils zugehörigen Wellen bzw. Achsen.

Die Schrittmotoren werden in der üblichen Weise über einen Taktgeber angesteuert, insbesondere von einem gemeinsamen Taktgenerator. Dadurch läßt sich ein Gleichlauf der Motoren leicht herstellen. So sind die Schrittmotoren für ein Schwenken des Scheinwerfers in einer bestimmten Ebene, insbesondere in der horizontalen Ebene, synchron ansteuerbar.

Für ein Schwenken des Scheinwerfers in einer definierten weiteren Ebene, insbesondere in einer vertikalen Ebene, sind die Motoren derart ansteuerbar, daß ein Motor steht und der andere Motor sich dreht. Auch sind überlagerte Bewegungen ausführbar, etwa Diagonalschwenks des Scheinwerfers. Hierfür sind unterschiedliche Geschwindigkeiten der Schrittmotoren erforderlich.

Vorzugsweise ist die Frequenz des Taktgenerators bzw. der Taktgeneratoren veränderbar. Dadurch läßt sich auf einfache Weise auch die Geschwindigkeit der Schrittmotoren verändern. So sollte im Nahbereich eine größere Verstellgeschwindigkeit möglich sein, als bei Ausleuchtung von in der Ferne liegenden Objekten.

Besonders vorteilhaft ist eine Spannungsversorgung der Lampe über das Gestell, insbesondere die Gabel. Am Übergang zwischen dem feststehenden Gehäuse und dem drehenden Gestell sind Schleifelemente, insbesondere Schleifringe zur Übertragung der elektrischen Leistung vorgesehen.

Ein ebenfalls erfindungsgemäßer Scheinwerfer mit Reflektor und Lampe ist dadurch gekennzeichnet, daß die Lampe relativ zum Reflektor verstellbar ist, insbesondere zwischen mindestens zwei Positionen. Vorteilhafterweise ist die Lampe in einer Position zur Erzielung von Punktlicht im Brennpunkt des Reflektors angeordnet und zur Erzielung von Streulicht aus dem Brennpunkt herausbewegbar, oder umgekehrt.

Zur einfachen Verstellung der Lampe relativ zum Reflektor ist ein Zugmagnet vorgesehen. Dieser ist zur Lampe parallel geschaltet, insbesondere über eine Gleichrichterschaltung, derart, daß bei einer ersten Polung der Lampenspannung eine Spannung am Zugmagnet anliegt und bei einer umgekehrten Polung der Lampenspannung am Zugmagnet keine Spannung anliegt. Durch Umpolung der Lampenspannung läßt sich so auf einfache Weise eine Verstellung zwischen Streulicht und Punktlicht realisieren.

Weiterhin erfindungsgemäß ist ein Scheinwerfer, der dadurch gekennzeichnet ist, daß die Verstellung des Scheinwerfers und/oder die Verstellung der Lampe relativ zum Reflektor über eine Fernbedienung erfolgt, etwa über Kabel oder drahtlos. Besonders bevorzugt ist eine Fernbedienung über UHF-Funk mit mehreren Frequenzen, von denen eine ausgewählt wird oder mit wechselnden Frequenzen. Ziel ist die Funkfernbedienung ohne Beeinflussung der gleichartigen Scheinwerfer auf gegebenenfalls benachbarten Fahrzeugen. Für die Steuerung der Fernbedienung sind vorzugsweise eine Tastatur oder ein Joystick vorgesehen.

Als Erfindung beansprucht wird auch ein Scheinwerfer mit Reflektor und Lampe, der dadurch gekennzeichnet ist, daß der Reflektor eine Halterung für den Einsatz von Filterscheiben aufweist. Die Halterung kann nach Art eines Einschubes quer zur Strahlrichtung des Scheinwerfers ausgebildet sein. Als Filterscheibe ist vorzugsweise eine Infrarotscheibe vorgesehen. Auch kann die Halterung so ausgestaltet sein, daß mehrere Filterscheiben zugleich einsetzbar sind.

Schließlich ist Gegenstand der Erfindung auch ein Scheinwerfer mit Reflektor und Lampe, der durch eine klarsichtige Abdeckung über dem Reflektor gekennzeichnet ist, insbesondere eine Abdeckung aus temperaturbeständigem Kunststoff. Die Abdeckung ist vorteilhafterweise starr auf einem Gehäuse des Scheinwerfers angeordnet, während der Reflektor relativ zum Gehäuse verstellbar ist. Die Abdeckung ist zylinderförmig ausgebildet nach Art der Abdeckung für ein handelsübliches Blaulicht.

Weitere Merkmale der Erfindung ergeben sich aus den Ansprüchen und aus der Beschreibung im übrigen.

Ausführungsbeispiele der Erfindung werden nachfolgend anhand von Zeichnungen erläutert. Es zeigen:

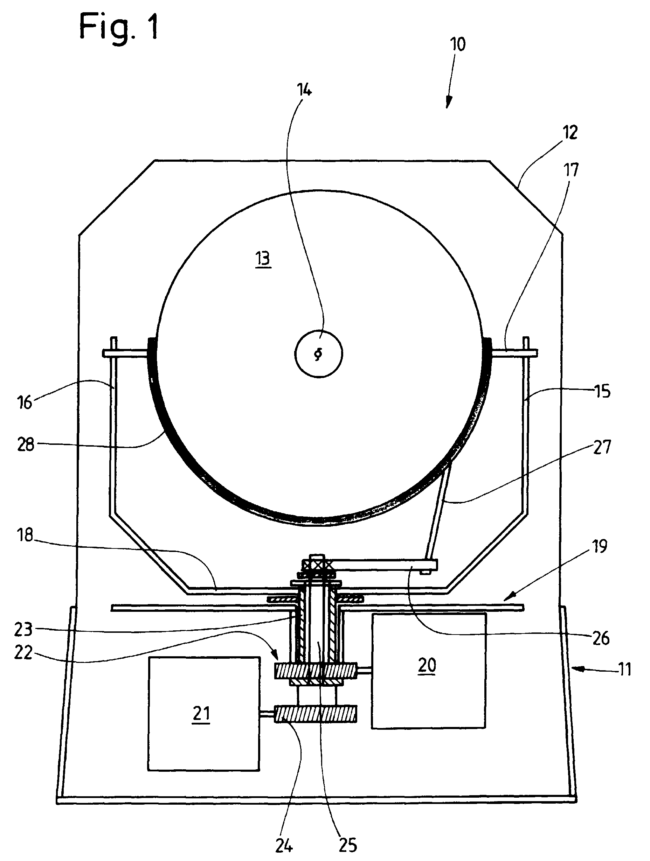

- Fig. 1: einen erfindungsgemäßen Scheinwerfer in Frontansicht,
- Fig. 2: einen Reflektor des Scheinwerfers in einer Draufsicht,
- Fig. 3: eine Prinzipdarstellung von elektrischen und mechanischen Bauteilen zur Strahlverstellung des Scheinwerfers.

Ein Such- und Sicherheitsscheinwerfer 10 weist ein Gehäuse aus Gehäusesockel 11 und zylindrischer, klardurchsichtiger Abdeckkappe 12 aus temperaturbeständigem Kunststoff auf. Der Gehäusesockel ist in nicht gezeigter Weise auf einem Autodach befestigt, etwa mit drei Magnetfüßen oder anstelle eines handelsüblichen Blaulichts an einem quergerichteten Träger.

Im Gehäuse sind ein Reflektor 13, eine Glühlampe 14 und Antriebe für die Verstellung des Reflektors 13 angeordnet. Der Reflektor 13 ist von einem Gestell nach Art einer Gabel mit zwei Gabelarmen 15 und 16 gehalten. Zwischen den Gabelarmen bzw. an diesen ist ein Querträger 17 drehbar gelagert, der den Reflektor 13 an dessen Rückseite trägt. Die Gabelarme 15, 16 erstrecken sich im wesentlichen in vertikaler Richtung, der Querträger 17 in horizontaler Richtung.

Die Gabelarme 15, 16 sind an ihren unteren Enden zusammengeführt zu einer horizontalen Basis 18. Diese ist drehbar auf einer Montageplatte 19 am Gehäusesockel 11 gelagert.

Unterhalb der Montageplatte 19 sind Antriebe zur Verstellung des Reflektors 13 ortsfest angeordnet, nämlich zwei Schrittmotoren 20, 21. Der erste Schrittmotor 20 bewegt über ein Schneckengetriebe 22 eine aufwärtsgerichtete, durch die Montageplatte 19 hindurchgehende und mit der Basis 18 verbundene Hohlwelle 23. Bei Betätigung des Schrittmotors 20 erfolgt eine Drehung der Basis 18 und damit ein Verschwenken des Reflektors 13 in einer horizontalen Ebene.

Der zweite Schrittmotor 21 treibt über ein zweites Schneckengetriebe 24 eine durch die Hohlwelle 23 hindurchgehende Welle 25 an. Diese ist oberhalb der Basis 18 mit einem Schwenkhebel 26 verbunden, der über ein Gestänge 27 mittelbar am Reflektor 13 oder am Querträger 17 angelenkt ist. Bei Drehung des Schwenkhebels 26 durch den Schrittmotor 21 relativ zur Basis 18, d. h. bei einer Differenz der Geschwindigkeiten der beiden Schrittmotoren, ergibt sich ein Verschwenken des Reflektors 13 in einer vertikalen Ebene.

Die Drehbewegung des Reflektors 13 in einer horizontalen Ebene definiert eine erste Achse und die Schwenkbarkeit des Reflektors 13 relativ zur Gabel eine zweite Achse. Schließlich ist durch den Antrieb des Schwenkhebels 26 eine dritte Achse gegeben. Dabei sind die erste und die dritte Achse koaxial ausgerichtet.

Zum Schwenken nur in der horizontalen Ebene (um die erste Achse) müssen beide Schrittmotoren mit gleicher Geschwindigkeit synchron angetrieben werden. Sofern nur ein Schwenk um die zweite Achse (in vertikaler Ebene) erfolgen soll, sind ein Stillstand des ersten Schrittmotors 20 und ein Antrieb des zweiten Schrittmotors 21 erforderlich. Für Diagonalbewegungen des Reflektors 13 müssen beide Schrittmotoren angetrieben sein, jedoch mit einer Drehzahldifferenz. Vorzugsweise ist der Reflektor 13 in horizontaler Ebene ohne Begrenzung drehbar und in vertikaler Ebene um etwa 45° nach unten und 90° nach oben verschwenkbar.

Die Spannungszuführung für die Glühlampe 14 erfolgt über die isoliert gelagerte Hohlwelle 23 mit einem nichtgezeigten Schleifkontakt auf der Antriebsseite (Seite der Schrittmotoren) und weiter über die Gabelarme 15, 16 sowie über den Querträger 17 oder über in diesem Bereich angeschlossene Drähte. Die Zuführung über Schleifkontakte ermöglicht die bereits genannte horizontale Drehung des Scheinwerfers ohne Wegbegrenzung. Bei Inkaufnahme eines demgegenüber nur kleinen Drehbereichs können auch flexible Kabelzuführungen vorgesehen sein. In einer nichtgezeigten Ausführungsform ist auch die Welle 25 hohl ausgebildet und nimmt eine Kabelzuführung für die Spannungsversorgung der Glühlampe 14 auf.

Die Schrittmotoren 20, 21 werden über einen gemeinsamen Taktgenerator angesteuert. Dadurch ist ein absoluter Gleichlauf für Schwenken in horizontaler Ebene möglich. Die Schrittmotorsteuerung beinhaltet eine elektronische Strombegrenzung, so daß elektrische Endlagenschalter nicht erforderlich sind. Mechanische Wegbegrenzungen, Anschläge oder dergleichen, sind demgegenüber ausreichend.

Die Regelung der Spannungsversorgung der Glühlampe 14 erfolgt über ein Relais. Die Schrittmotoren werden über eine Fernbedienung angesteuert. Möglich ist eine solche Fernbedienung über ein Kabel ins Fahrzeuginnere. Vorzugsweise ist eine Funkfernbedienung im UHF-Bereich vorgesehen. Ein Sender ist im Fahrzeuginneren angeordnet oder als mobile Einheit ausgebildet, etwa ähnlich den modernen Schließsystemen für Personenkraftwagen. Zweckmäßig ist die Verwendung einer bestimmten Frequenz aus mehreren möglichen Frequenzen oder sogar die Verwendung wechselnder Frequenzen. Ziel ist die Vermeidung der Beeinflussung gegebenenfalls benachbarter Scheinwerfer.

Als Schnittstelle zum Benutzer sind eine Tastatur, ein Joystick oder eine kleine Anzahl von Schaltflächen vorgesehen.

Die Glühlampe 14 kann eine handelsübliche H1-Lampe sein oder eine Lampe anderer Art. Als Spannung werden vorzugsweise 12 oder 24 Volt verwendet. Auch kann eine Xenon-Lampe mit H1-Sockel und zugehörigem Vorschaltgerät verwendet werden. Neben unterschiedlichen Spannungen können auch Lampen mit unterschiedlichen Leistungen vorgesehen sein, beispielsweise mit 55 oder 100 Watt.

Der Reflektor 13 weist eine Halterung 28 für den Einsatz von Filterscheiben auf, insbesondere von Infrarotscheiben 29. Die Halterung 28 ist als U-förmige Einfassung ausgebildet und erstreckt sich am Umfang der unteren Hälfte des Reflektors 13. Die umlaufende U-förmige Aufnahme 30 ist gerade so weit, daß der Rand der einliegenden Filterscheibe stramm gehalten wird. Zu diesem Zweck können in der Aufnahme 30 Reib- oder Federelemente vorgesehen sein. Zum Austausch der Filterscheiben wird die Abdeckkappe 12 vom Gehäusesockel 11 abgenommen und nach dem Austausch wieder aufgesetzt. Die Abdeckkappe 12 kann auch mit einer Filterfunktion versehen sein, etwa für den Durchlaß von ausschließlich infrarotem Licht.

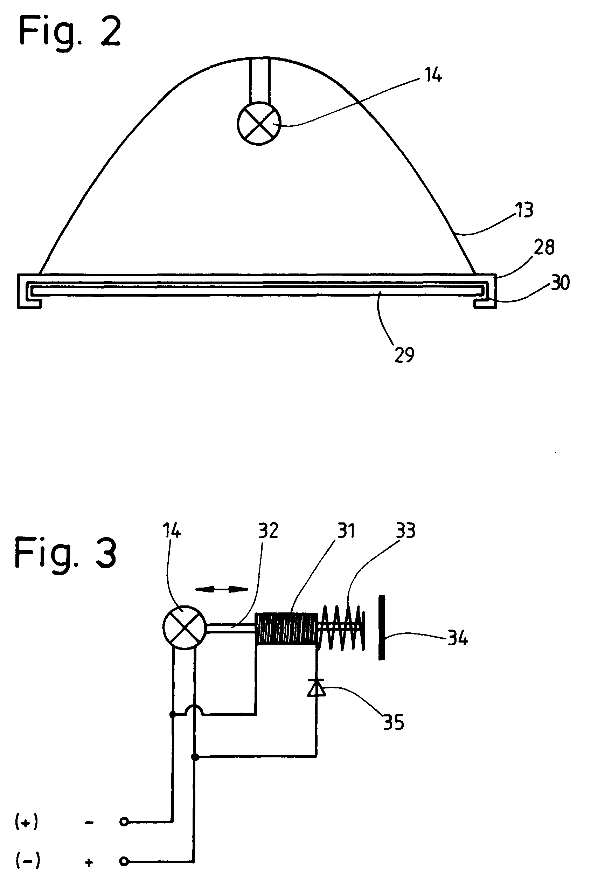

In einer Sonderausstattung ist der Scheinwerfer mit einer Leuchtweitenverstellung ausgebildet. Möglich ist die Verstellung zwischen Punktlicht bei hoher Leuchtweite und Streulicht bei geringerer Leuchtweite. Verstellt wird die Relativposition zwischen Glühlampe 14 und Reflektor 13. Zu diesem Zweck ist ein Zugmagnet 31 vorgesehen, mit dem die Lampe 14 aus dem Brennpunkt des Reflektors 13 herausgezogen werden kann. Eine entsprechende Prinzipskizze zeigt Fig. 3. Der Zugmagnet 31 ist aktiviert. Ein Zuganker 32 ist in die in Fig. 3 gezeigte Position bewegt und zwar gegen den Widerstand einer Feder 33.

Bei Deaktivierung des Zugmagnets wird der Zuganker 32 durch den Druck der Feder 33 nach rechts bewegt bis zur Anlage am Anschlag 34. Die letztgenannte Stellung ist vorzugsweise die "Normalposition" mit Punktlicht.

Das Umschalten des Zugankers und damit der Leuchtweite kann auf einfache Weise durch Umpolung der Lampenspannung erfolgen. Hierzu ist der Zugmagnet parallel zur Lampe 14 geschaltet. In die Versorgung des Zugankers 32 ist ein Gleichrichter 35 geschaltet, so daß der Zuganker 31 in der in Fig. 3 gezeigten Polung Spannung erhält, nicht jedoch nach einer Umpolung (Vorzeichen in Fig. 3 in Klammern).

Vorzugsweise wird die Einstellung "Streulicht" im Nahbereich verwendet. In dieser Betriebsart wird außerdem der Taktgenerator für die Schrittmotorsteuerungen auf eine höhere Frequenz gestellt, so daß ein schnelleres Bewegen des Reflektors bei Beobachtungen im Nahbereich möglich ist.

Für die Bedienung des Scheinwerfers sind insgesamt maximal acht Tasten erforderlich, nämlich LINKS - RECHTS - AUF - AB - EIN - AUS - NAH - FERN. Für die Richtungstasten kann auch ein Joystick vorgesehen sein. Die vier zuletzt genannten Tasten können auch auf insgesamt zwei Tasten gelegt werden, z. B. EIN/AUS auf eine einzige Taste.

### Bezugszeichenliste:

- 10: Scheinwerfer
- 11: Gehäusesockel
- 12: Abdeckkappe
- 13: Reflektor
- 14: Glühlampe
- 15: Gabelarm
- 16: Gabelarm
- 17: Querträger
- 18: Basis
- 19: Montageplatte
- 20: Schrittmotor
- 21: Schrittmotor
- 22: Schneckengetriebe
- 23: Hohlwelle
- 24: Schneckengetriebe
- 25: Welle
- 26: Schwenkhebel
- 27: Gestänge
- 28: Halterung
- 29: Infrarotscheibe
- 30: Aufnahme
- 31: Zugmagnet
- 32: Zuganker
- 33: Feder
- 34: Anschlag
- 35: Gleichrichter

## Patentansprüche

1. Scheinwerfer, insbesondere zum Aufbau auf Fahrzeugen, **gekennzeichnet durch** eine motorische Verstellbarkeit um mindestens eine Achse.

2. Scheinwerfer nach Anspruch 1, **gekennzeichnet durch** eine motorische Verstellbarkeit um mindestens zwei Achsen, vorzugsweise um mindestens eine horizontale und mindestens eine vertikale Achse.

3. Scheinwerfer nach mindestens einem der voranstehenden Ansprüche, **dadurch gekennzeichnet**, daß eine Verstellung um die verschiedenen Achsen unabhängig voneinander und/oder gekoppelt erfolgt, vorzugsweise in dem als Antrieb für die Verstellung je Achse ein Schrittmotor (20, 21) vorgesehen ist, wobei insbesondere die Schrittmotoren über einen Schneckentrieb (22, 24) eine jeweils zugehörige Welle (23, 25) antreiben.

4. Scheinwerfer nach Anspruch 3, **dadurch gekennzeichnet,** daß ein Reflektor (13) mit Lampe (14) um mindestens zwei Achsen schwenkbar ist.

5. Scheinwerfer nach Anspruch 4, **dadurch gekennzeichnet,** daß der Reflektor (13) an einem um eine erste Achse schwenkbaren Gestell, insbesondere an einer Gabel mit Gabelarmen (15, 16), gehalten ist, und vorzugsweise im Gestell, d. h. relativ zum Gestell, um eine zweite Achse schwenkbar ist.

6. Scheinwerfer nach Anspruch 5, **dadurch gekennzeichnet,** daß die Verstellung um die zweite Achse durch einen Schwenkhebel (26) oder ein anderes Getriebeglied erfolgt, dessen Drehachse eine dritte Achse darstellt, die konzentrisch bzw. koaxial zur ersten Achse angeordnet ist.

7. Scheinwerfer nach Anspruch 6, **dadurch gekennzeichnet,** daß das Gestell mit einer angetriebenen Hohlwelle (23) - erste Achse - verbunden und relativ zu einem Gehäuse (Gehäusesockel 11) drehbar ist, wobei in der Hohlwelle (23) eine weitere angetriebene Welle (25) - dritte Achse - drehbar gelagert ist.

8. Scheinwerfer nach einem der voranstehenden Ansprüche, **dadurch gekennzeichnet,** daß die Schrittmotoren (20, 21) für ein Schwenken des Scheinwerfers in einer bestimmten Ebene synchron ansteuerbar sind, wobei vorzugsweise die Schrittmotoren (20, 21) für ein Schwenken des Scheinwerfers in einer bestimmten anderen Ebene so ansteuerbar sind, daß ein Schrittmotor (20) stillsteht und der andere Schrittmotor (21) dreht.

9. Scheinwerfer nach einem der voranstehenden Ansprüche, **dadurch gekennzeichnet,** daß die Schrittmotoren von einem gemeinsamen Taktgenerator gespeist werden, und vorzugsweise die Frequenz des Taktgenerators oder von Taktgeneratoren für die Schrittmotoren zur Änderung der Geschwindigkeit der Schrittmotoren (20, 21) veränderbar ist.

10. Scheinwerfer einem der voranstehenden Ansprüche, **dadurch gekennzeichnet,** daß die Spannungsversorgung der Lampe (14) über das Gestell, insbesondere die Gabel (Gabelarme 15, 16), erfolgt und/oder über Schleifelemente aus dem feststehenden Gehäuse in den Bereich des drehenden Gestells oder des Reflektors (13) geführt ist.

11. Scheinwerfer, insbesondere nach mindestens einem der voranstehenden Ansprüche, mit einem Reflektor (13) und einer Lampe (14), **dadurch gekennzeichnet,** daß die Lampe (14) relativ zum Reflektor (13) verstellbar ist.

12. Scheinwerfer nach Anspruch 11, **dadurch gekennzeichnet,** daß die Lampe (14) relativ zum Reflektor (13) in mindestens zwei Positionen durch insbesondere einen Zugmagneten (31) verstellbar ist, vorzugsweise in einer Position zur Erzielung von Punktlicht im Brennpunkt des Reflektors (13) angeordnet und zur Erzielung von Streulicht aus dem Brennpunkt herausbewegbar ist.

13. Scheinwerfer nach Anspruch 11, **dadurch gekennzeichnet,** daß der Zugmagnet (31) zur Lampe (14) parallel geschaltet ist, insbesondere über eine Gleichrichterschaltung, derart, daß bei einer ersten Polung der Lampenspannung auch eine Spannung am Zugmagnet (31) anliegt und bei einer umgekehrten Polung der Lampenspannung am Zugmagnet (31) keine Spannung anliegt.

14. Scheinwerfer, insbesondere nach mindestens einem der voranstehenden Ansprüche, **dadurch gekennzeichnet,** daß die Verstellung des Scheinwerfers und/oder die Verstellung der Lampe relativ zum Reflektor über eine Fernbedienung erfolgen, wobei die Fernbedienung vorzugsweise über eine Tastatur oder einen Joystick, über ein Kabel oder drahtlos, z.B. über Funk, insbesondere UHF-Funk erfolgt, vorzugsweise über eine von mehreren wählbaren Frequenzen oder über wechselnde Frequenzen gesteuert wird.

15. Scheinwerfer, insbesondere nach mindestens einem der voranstehenden Ansprüche, mit einem Reflektor und einer Lampe, **dadurch gekennzeichnet,** daß der Reflektor (13) eine Halterung (28) für den Einsatz von Filterscheiben aufweist.

16. Scheinwerfer nach Anspruch 15, **dadurch gekennzeichnet,** daß als Filterscheibe eine Infrarotscheibe (29) vorgesehen ist und/oder die Halterung (28) nach Art eines Einschubs quer zur Strahlrichtung des Scheinwerfers ausgebildet ist.

17. Scheinwerfer, insbesondere nach mindestens einem der voranstehenden Ansprüche, mit einem Reflektor und einer Lampe, **gekennzeichnet durch** eine klarsichtige Abdeckung (12) über dem Reflektor (13).

18. Scheinwerfer nach Anspruch 17, **dadurch gekennzeichnet,** daß die Abdeckung (12) aus vorzugsweise temperaturbeständigem Kunststoff starr auf einem Gehäuse (Gehäusesockel 11) des Scheinwerfers angeordnet ist, während der Reflektor (13) relativ zum Gehäuse verstellbar ist.
